Europäisches Patentamt

(19) **European Patent Office** (11) Publication number: **0 039 717**

**Office européen des brevets** **B1**

(12) # EUROPEAN PATENT SPECIFICATION

(45) Date of publication of patent specification: **14.03.84** (51) Int. Cl.³: **C 01 F 7/56, C 01 F 7/76**

(21) Application number: **80902243.7**

(22) Date of filing: **14.11.80**

(86) International application number:
**PCT/SE80/00287**

(87) International publication number:
**WO 81/01403 28.05.81 Gazette 81/13**

(54) **A METHOD OF PREPARING WATER PURIFYING AGENTS.**

(30) Priority: **16.11.79 SE 7909512**

(43) Date of publication of application:
**18.11.81 Bulletin 81/46**

(45) Publication of the grant of the patent:
**14.03.84 Bulletin 84/11**

(84) Designated Contracting States:
**AT CH DE FR GB LI LU NL**

(56) References cited:
**DE - B - 1 102 713**
**DE - B - 1 567 470**
**SE - A - 7 113 443**
**SE - B - 372 497**
**SE - B - 385 687**
**SE - B - 397 821**
**SE - B - 407 399**

(73) Proprietor: **Boliden Aktiebolag**
**Box 5508**
**S-114 85 Stockholm (SE)**

(72) Inventor: **NILSSON, Rolf Olof**
**Ransviksvägen 14**
**S-260 42 Mölle (SE)**
Inventor: **SCHÖN, Gunnar Tore Lennart**
**Viskgatan 38**
**S-252 47 Helsingborg (SE)**

(74) Representative: **Lundin, Björn-Eric et al,**
**Boliden Aktiebolag Box 5508**
**S-114 85 Stockholm (SE)**

Courier Press, Leamington Spa, England.

A method of preparing water purifying agents

The present invention relates to a method of producing a substantially iron-free basic aluminium chloride and/or basic aluminium sulphato-chloride from iron-containing bauxite, shale or other iron-containing aluminium-containing minerals by digesting the starting material in an acid environment containing sulphuric acid; separating the major part of the iron content as an aluminium iron sulphate; and precipitating an aluminium sulphato-chloride of low iron content by means of hydrogen chloride gas from the liquor remaining after said separating.

The world's need for drinking water increases together with the increase in world population, while the world's available supply of drinking water has been diminished by the increase in contamination of the environment. When viewed against this background, it will be obvious that the need for water-purifying agents will greatly increase.

Water which is suitable to drink must first be disinfected and clear, i.e. freed from colloids and suspended particles, which are unable to settle. It has been found that aluminium compounds, primarily basic aluminium chloride with a certain sulphate content or basic aluminium sulphate chloride are particularly effective substances for clarifying waters. The presence of sulphate results in a higher degree of separation of contaminants, and thereby in clearer water, than when solely aluminium chloride is used.

In the production of aluminium-containing chemical products, the most common starting material is aluminium hydroxide. Aluminium hydroxide is mainly prepared by a method according to the Bayer-process. This process, however requires a starting material in the form of a high-grade bauxite with a low silica content, which otherwise gives rise to losses of alkali and aluminium in the form of sodium aluminium silicate in the so-called red mud. Bauxites containing more than 5% silica are not used. Neither is it possible to utilize the iron content of bauxite in this context, because said iron content is lost in the red mud. Particularly when manufacturing aluminium-containing chemical products for water purifying purposes, such as basic aluminium chloride containing a certain amount of sulphate, it is necessary to use as a starting material pure aluminium hydroxide, in order to fulfil the specific requirements placed on the composition of the final product.

Thus, methods are known, such as the method described in SE—A—7308968—2, in which the aluminium hydroxide is neutralized with sulphuric acid, and the aluminium-sulphate content is converted to a solid basic aluminium chloride of low sulphate content, by reaction with a mixture of calcium hydroxide and calcium chloride. At the same time, however, considerable quantities of calcium sulphate (gypsum) are obtained, which creates serious dumping problems.

In other known methods, there is added to the aluminium hydroxide a mixture of hydrochloric acid and sulphuric acid, whereafter the resultant aluminium sulphate chloride is caused to react with calcium hydroxide, to form a solid, basic aluminium chloride of low sulphate content. In this case the amount of calcium sulphate produced is only half that produced by the other methods. The amount produced, however, is still very large and consequently causes handling and dumping problems.

Further, a number of methods are known (FR—A 1.558,347, GB—A—1,395,703, NO—C— 751136, US—A—4,177,242 and SE,A, 7802201—9 for treating silica-containing and iron-containing aluminium raw materials with sulphuric acid, for the purpose of producing aluminium oxide for use in the manufacture of aluminium. In general, the continued treatment process for producing aluminium oxide comprises treating the resultant slurry with a sulphuric acid-hydrochloric acid solution, followed by precipitation with hydrogen chloride, while cooling the solution. The resultant crystals are then decomposed at a temperature of 300—400°C, to drive off the water, and the whole of the chloride content and the decomposition product are calcined at high temperatures, to form a pure aluminium oxide.

These methods, however, pertain to the manufacture of a completely different product than the present invention, and hence also lack those steps required when producing the aforesaid water-purifying agents based on basic aluminium chloride and characteristic of the method according to the present invention.

The object of the present invention is to eliminate the disadvantages inherent of the aforesaid methods for producing water-purifying agents based on basic aluminium chloride. In accordance with the invention, said precipitate is washed with a hydrochloric-acid containing washing liquid to decrease the sulphate content of the precipitate and in that, subsequent to being washed, the precipitate is separated from at least the major part of the washing liquid, is heated up from 100° to 700°C in the presence of water thereby to obtain a crystalline basic aluminium chloride containing sulphate, and that hydrogen chloride gas released during said heating up is recycled to the stage in which said aluminium sulphato-chloride is precipitated.

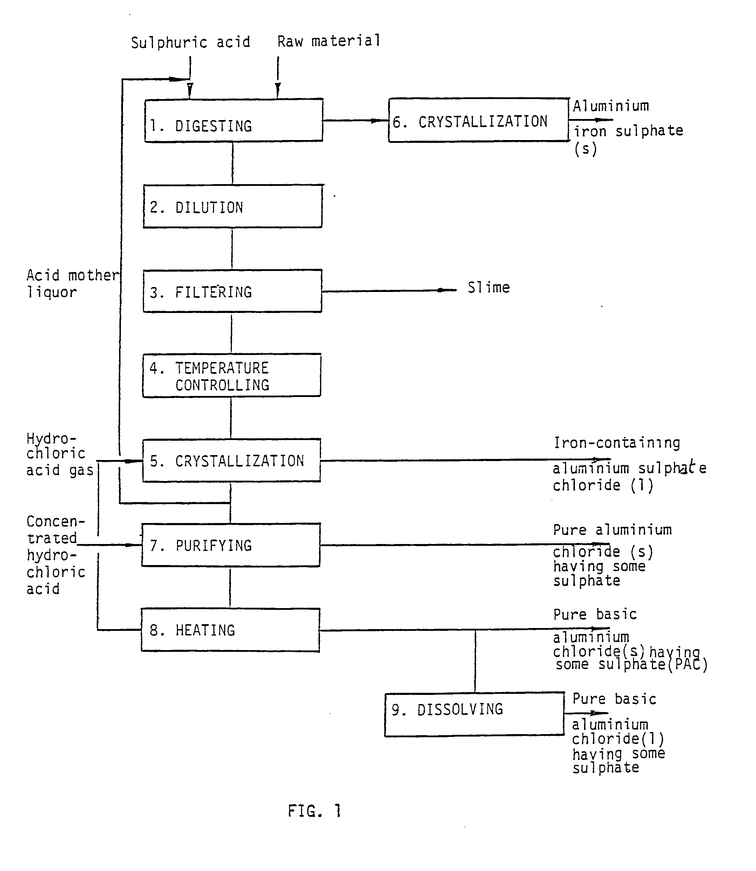

The invention will now be described in more detail with reference to the accompanying drawings, in which Figure 1 is a block schematic illustrating a preferred embodiment of the invention, in which the starting material comprises highly contaminated aluminium raw materials.

The aluminium raw material, which is heavily contaminated — primarily with iron and silicon — and which may, if necessary, be crushed and ground and optionally calcined, is digested (1) with a mixture of concentrated sulphuric acid and water, and optionally with re-circulated acid mother liquor containing chlorides and sulphates of iron and aluminium. Subsequent to a completed leaching at elevated temperatures, a useable product can be obtained from part of the digestion solution, by causing the solution to cool and therewith to crystallize (6) in the form of aluminium iron sulphate, which can be used to advantage as a water-purifying agent but which, because of its iron content is utilized only as a flocculating agent in the purification of sewage water and other contaminated water deemed unsuitable for purification as drinking water. When necessary, the digestion solution is evaporated prior to said crystallization. This product, which contains mainly iron sulphate and aluminium sulphate, is well suited — inter alia — as a precipitating agent for sewage purification processes. That part of the digestion solution which is not caused to crystallize is then diluted (2), normally with a liquid, which may be water or chloride-containing liquid or sulphate-containing liquid obtained from the process, or mixtures thereof. Subsequent to diluting said part of said solution, insoluble material is filtered off (3), this insoluble material comprising mainly undissolved silicon compounds originating from the aluminium raw material, said insoluble material being either returned to the digestion stage or dumped. Subsequent to heating the filtrate (4), hydrogen chloride gas is introduced thereinto, to cause aluminium sulphate chloride to crystallize out (5). The relationship between the sulphate content and the chloride content is controlled with the temperature of crystallization, in a manner such as to obtain a relationship which lies at least in the proximity of that desired in the end product. As indicated by the arrow extending in Figure 1 from stage (5), and associated text, if desired part of the product can be taken directly from said stage in the form of iron-containing aluminium sulphate chloride in solution form.

The aluminium sulphate chloride obtained is very easy to filter. By washing (7) the primarily obtained aluminium sulphate chloride with concentrated hydrochloric acid, there is surprisingly obtained an aluminium chloride which is totally free from iron. The sulphate content is also very low in the aluminium chloride washed with hydrochloric acid. Alternatively, if desired part of the product can be taken out in the form of a solid, iron-free aluminium chloride, as shown by the arrow at 7.

By heating (8) the aluminium sulphate choride, washed with hydrochloric acid to the extent desired in accordance with the above, to a given temperature of at least 100°C and at most about 700°C, over a given period of time, a quantity of hydrogen chloride gas, of such magnitude is driven off and returned to the crysallization stage (5) that there is obtained a solid, basic aluminium sulphate chloride having particularly good properties with regard to water purification.

By dissolving (9) the resultant solid, basic aluminium sulphate chloride in water, there can be prepared a liquid product exhibiting the same good properties, whereat the water-purifying agent is able to mix more readily with the contaminated water at the place of use.

The composition of the end product according to the present invention is adjusted by first roughly adjusting the ratio of sulphate to chloride, by controlling the crystallization temperature, as before-mentioned. A low crystallization temperature of about 10—40°C can be maintained, by cooling the filtrate, whereat an aluminium sulphate salt of very low chloride content is obtained. By maintaining a cystallization temperature of about 40—70°C, it is possible to obtain an aluminium sulphate salt of high chloride content.

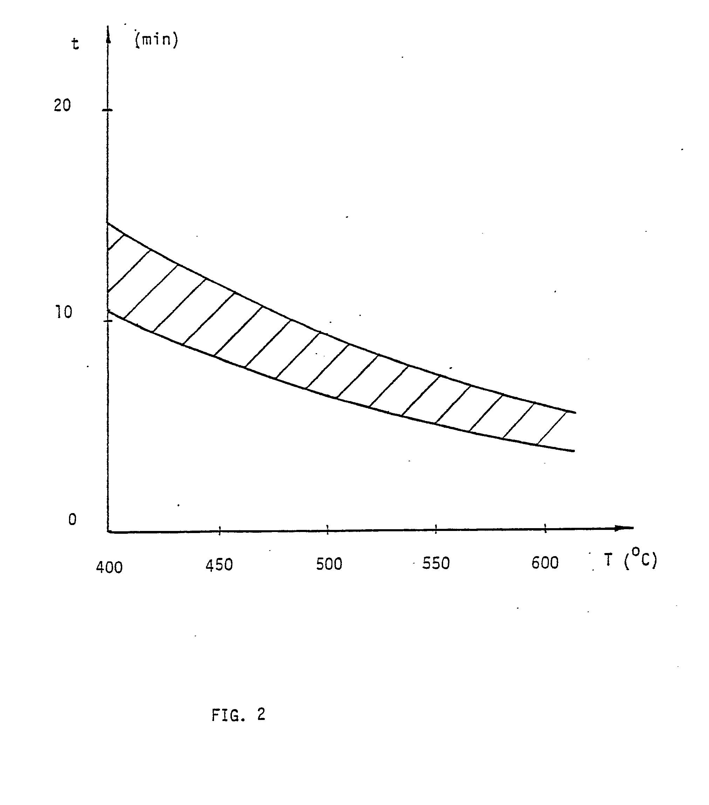

After the subsequent purifying step (7), the aluminium sulphate chloride crystals are heated, in accordance with the aforegoing. Figure 2 illustrates a heating process for finely adjusting the composition of the basic aluminium sulphate chloride to a preferred composition. In this respect, temperature and time are held substantially within the area between the two curves of Figure 2 during the heating process.

As will be seen from the Figure, this area is defined upwardly, i.e. towards longer times, by the relationship

$$t(min) = 95 \cdot e^{-4.7 \cdot 10^{-3}T \, (°C)}$$

and downwardly, i.e. towards shorter times, by the relationship

$$t(min) = 77 \cdot e^{-5.0 \cdot 10^{-3}T \, (°C)}$$

The available choice of a suitable calcination temperature is governed by the particular apparatus used and the technology applied. At very high calcination temperatures, about 700°C and thereabove, the preferred composition is reached so quickly that it is difficult to monitor the method, and hence the precision when adjusting the composition may be lost.

In the following examples and in the claims, by the term basicity is meant generally the ratio OH/A1 in the general formula for basic aluminium cloride $Al \, Cl_x \, (OH)_y$ and basic aluminium sulphate chloride $Al \, Cl_x \, (OH)_y \, (SO_4)_z$. Thus all compositions in which x and x + 2z are less than 3 are basic.

The invention will now be illustrated by means of a number of working examples.

## Example 1

Aluminium chloride hexahydrate, $AlCl_3 \cdot 6H_2O$, was heated at 400—600°C for different lengths of time. The contents of aluminium and chlorine were determined and the basicity calculated. The values obtained are given in table 1 below. In addition, the pH was determined in a solution of 5% by weight of the product in water. Basic aluminium chlorides whose basicity is greater than 2.5 are not soluble in water. In those cases when the product did not dissolve, this is indicated in the table with the word "insoluble".

TABLE 1

| Calc. temp. | 400°C | | | 450°C | | | 500°C | | | | 550°C | | | | 600°C | | | |
|---|---|---|---|---|---|---|---|---|---|---|---|---|---|---|---|---|---|---|
| Calc. time mins. | 10 | 30 | 60 | 10 | 30 | 60 | 1 | 5 | 10 | 30 | 1 | 5 | 10 | 30 | 1 | 5 | 10 | 30 |
| Al % | 16.4 | 32.3 | 43.2 | 22.2 | 45.4 | 45.3 | 11.9 | 16.7 | 29.9 | 46.9 | 11.6 | 17.7 | 34.9 | 45.2 | 11.8 | 18.7 | 35.4 | 45.7 |
| Cl % | 37.6 | 18.1 | 7.5 | 31.3 | 7.1 | 6.1 | 43.0 | 37.3 | 22.8 | 6.2 | 42.9 | 36.2 | 17.5 | 5.6 | 42.5 | 34.2 | 17.5 | 4.9 |
| Basicity molar ratio OH/Al | 1.4 | 2.6 | 2.9 | 1.9 | 2.9 | 2.9 | 0.2 | 1.3 | 2.4 | 2.9 | 0.1 | 1.4 | 2.6 | 2.9 | 0.3 | 1.6 | 2.7 | 2.9 |
| pH of 5% by weight solution | 3.68 | in-soluble | in-soluble | 3.87 | in-soluble | in-soluble | 3.55 | 3.72 | 3.96 | in-soluble | 3.52 | 3.63 | in-soluble | in-soluble | 3.54 | 3.70 | in-soluble | in-soluble |

### Example 2

Ground bauxite containing 49.5% by weight $Al_2O_3$, 18.3% by weight $Fe_2O_3$, 18.3% by weight $Fe_2O_3$, 2.8% by weight $TiO_2$ and 2.8% by weight $SiO_2$, was digested with concentrated sulphuric acid and water for 2 hrs at 110°C. 90% of the aluminium and the iron entered the solution. The digestion solution was diluted with water to form a solution containing 3.3% by weight Al, 1.5% by weight Fe, and 21.4% by weight $SO_4$. The insoluble material, mainly silicon compounds and titanium compounds, were filtered off. Hydrogen chloride gas was introduced into the filtrate, wherewith crystallization took place. The temperature of the solution was 45—50°C during the whole of the crystallizing process. Crystals were taken out on four different occasions during the total crystallizing process, and treated *per se*. The crystals of the four different batches had the following compositions:

| Crystal batch number | Al % | Fe % | SO$_4$ % | Cl % by weight |
|---|---|---|---|---|
| 1 | 11.0 | 0.25 | 4.2 | 40.3 |
| 2 | 10.7 | 0.20 | 7.9 | 36.7 |
| 3 | 11.0 | 0.18 | 3.2 | 41.1 |
| 4 | 11.1 | 0.10 | 1.5 | 43.0 |

Subsequent to the crystallization process, 11% of the input aluminium and 91% of the input iron were found present in the mother liquor. The crystals obtained had a very low content of iron and sulphate.

For the purpose of obtaining a basic aluminium sulphate chloride, the crystal-batch 4 was calcined for 20 minutes at 200°C, whereat a product have the following composition was obtained:

| Al % | Fe % | SO$_4$ % | Cl % by weight |
|---|---|---|---|
| 19.0 | 0.17 | 2.5 | 32.3 |

The product is soluble in water and has a basicity, i.e. a mole ratio of OH/A1, of 1.4.

### Example 3

Part of the digestion solution obtained in accordance with Example 2, was crystallized directly by lowering the temperature of the solution, to form a product suitable for water-purification purposes, there being crystallized an aluminium-iron-sulphate. A product containing 13.4% by weight water-soluble $Al_2O_3$, 4.6% by weight water-soluble $Fe_2O_3$ and 2.4% by weight water-insoluble substance was obtained.

That part of the solution which did not crystallize was diluted with water to form a solution containing 3.3% by weight Al, 1.5% by weight Fe and 21.4% by weight $SO_4$. The insoluble product, mainly compounds of silicon and titanium, was filtered off. The filtrate was cooled to 15—25°C, whereafter hydrogen chloride gas was introduced into the filtrate, to effect said crystallization. A temperature of from 15 to 25°C was maintained during the whole of the crystallization process. Subsequent to being dried at 40°C the crystallized product contained 9.5% by weight Al, 0.4% by weight Fe, 30.8% by weight $SO_4$ and 14.3% by weight Cl. The crystals contained 91% of the input aluminium and less than 10% of the input iron. It will be apparent from this that aluminium crystallizes much more selectively than iron.

The crystals were washed with concentrated hydrochloric acid, whereat after drying at 40°C a product having the following composition was obtained:

| Al % | Fe % | SO$_4$ % | Cl % by weight |
|---|---|---|---|
| 10.8 | 0.015 | 7.4 | 36.6 |

By washing the crystals, the iron content could be lowered from 0.4% to 0.015% by weight and the sulphate content from 30.8% to 7.4% by weight. The method also produced an aluminium sulphate chloride which was very poor in iron.

By calcinating the product for 20 minutes at 200°C, there was obtained a basic aluminium sulphate chloride of the following composition:

| Al % | Fe % | SO$_4$ % | Cl % by weight |
|---|---|---|---|
| 18.5 | 0.025 | 12.4 | 29.8 |

This product is soluble in water and has a basicity of 1.6.

### Example 4

An aluminium sulphate chloride was produced from diluted, filtered bauxite digestion solution, crystallized by adding hydrogen chloride gas thereto. The aluminium sulphate chloride was washed very thoroughly with concentrated hydrochloric acid, there being obtained an aluminium chloride of the following composition:

| Al % | Fe % | SO$_4$ % | Cl % by weight |
|---|---|---|---|
| 10.6 | 0.001 | 0.34 | 40.9 |

This aluminium chloride is of sufficiently good quality to provide an electolysis-pure aluminium oxide when calcined.

The product was calcined at 500°C for 5 minutes, whereat there was obtained a water-soluble aluminium chloride, with a basicity of 1.3.

### Example 5

A solution which is made acid with sulphuric acid and obtained when leaching alun-shale can be treated by neutralizing with limestone. If the neutralizing process is interrupted when the pH is 4.2, there is obtained a precipitate comprising mainly gypsum and aluminium hydroxide. One such precipitate containing 8.2% by weight Al, 1.3% by weight Fe, 4.0% by weight $PO_4$, 13.6% by weight Ca, and 34.0% by weight $SO_4$, was leached with a stoichiometric quantity of sulphuric acid for 1 hr at 95°C, whereat the major part of the aluminium, iron and phosphate was dissolved by passing hydrochloric acid gas down the filtrate at 55°C, there were obtained crystals of the following composition: 11.1% by weight Al, 0.024% by weight Fe, 0.18% by weight $PO_4$, 1.8% by weight $SO_4$ and 42.7% by weight Cl. The iron content was lowered to 0.004% by weight, by washing the crystals with concentrated hydrochloric acid. The crystals were heated to 450°C for 10 minutes, whereafter the crystals, which were soluble in water, contained 22.0% by weight Al and 31.3% by weight Cl, which corresponds to a basicity of 1.9.

### Claims

1. A method of producing a substantially iron-free basic aluminium chloride and/or basic aluminium sulphato-chloride from iron-containing bauxite, shale or other iron-containing aluminium-containing minerals by digesting the starting material in an acid environment containing sulphuric acid; separating the major part of the iron content as an aluminium iron sulphate; precipitating an aluminium sulphato-chloride of low iron content by means of hydrogen chloride gas from the liquor remaining after said separating; characterized in that washing said precipitate with a hydrochloric-acid containing washing liquid to decrease the sulphate content of the precipitate and in that, subsequent to being washed, the precipitate is separated from at least the major part of the washing liquid, is heated up from 100° to 700°C in the presence of water thereby to obtain a crystalline basic aluminium chloride containing sulphate, and that hydrogen chloride gas released during said heating up is recycled to the stage in which said aluminium sulphato-chloride is precipitated.

2. A method according to claim 1, characterized in that the precipitate is washed with so much concentrated hydrochloric acid that solid aluminium chloride is formed directly; and in that said solid aluminium chloride is then heated to form a basic aluminium chloride which is substantially free of sulphate.

3. A method according to claim 1, characterized in that the precipitate is washed with dilute hydrochloric acid, so as to dissolve said precipitate, whereafter aluminium chloride having a lower sulphate content than the precipitate is precipitated from the solution by re-crystallization, by introducing hydrogen chloride gas into said solution.

### Patentansprüche

1. Verfahren zur Herstellung eines im wesentlichen eisenfreien basischen Aluminiumchlorids und/oder basischen Aluminiumsulfatochlorids aus eisenhaltigem Bauxit, Schiefer oder anderen eisenhaltigen, aluminiumhaltigen Mineralien durch Aufschluß in einem schwefelsäurehaltigem sauren Milieu, Abtrennung des größeren Teils des Eisengehaltes als ein Aluminiumeisensulfat, Ausfällung eines Aluminiumsulfatochlorids mit geringem Eisengehalt mit Hilfe von Chlorwasserstoffsäuregas aus der nach dieser Abtrennung verbleibenden Mutterlauge, dadurch gekennzeichnet, daß man den Niederschlag mit einer chlorwasserstoffsäurehaltigen Waschflüssigkeit wäscht, um den Sulfatgehalt des Niederschlages zu senken und daß man anschließend an das Waschen den Niederschlag von wenigstens dem größeren Teil der Waschflüssigkeit abtrennt und in Gegenwart von Wasser auf 100 bis 700°C erhitzt, um so ein sulfathaltiges kristallines basisches Aluminiumchlorid zu erhalten, und daß man das während dieses Erhitzens freigesetzte Chlorwasserstoffsäuregas zu der Stufe, in welcher das Aluminiumsulfatochlorid ausgefällt wird, zurückführt.

2. Verfahren nach Anspruch 1, dadurch gekennzeichnet, daß man den Niederschlag mit so viel konzentrierter Chlorwasserstoffsäure wäscht, daß das feste Aluminiumchlorid direkt gebildet wird, und daß man dieses feste Aluminiumchlorid dann erhitzt, um ein basisches Aluminiumchlorid zu bilden, welches im wesentlichen sulfatfrei ist.

3. Verfahren nach Anspruch 1, dadurch gekennzeichnet, daß man den Niederschlag mit verdünnter Chlorwasserstoffsäure wäscht und so diesen Niederschlag auflöst, worauf man Aluminiumchlorid min einem niedrigeren Sulfatgehalt als der des Niederschlages durch Umkristallisieren aus der Lösung ausfällt, indem man Chlorwasserstoffsäuregas in die Lösung einleitet.

### Revendications

1. Procédé de production d'une chlorore d'aluminium basique et/ou d'un sulfochlorure d'aluminium basique, ne comportant pratiquement pas de fer, au départ de bauxite contenant de fer, de schistes ou d'autres minéraux contenant de l'aluminium et du fer, par digestion de la matière première dans un milieu acide contenant de l'acide sulfurique, séparation de la majeure partie de la teneur en fer sous forme de sulfate de fer et d'aluminium, précipitation d'un sulfochlorure d'aluminium de basse teneur en fer grâce à du gaz chlorhydrique au départ de la solution restant après cette séparation, caractérisé en ce qu'on lave ce précipité avec un liquide de lavage contenant de l'acide chlorhydrique pour diminuer la teneur en sulfate de précipité et, après lavage, le précipité est séparé d'au moins la majeure partie du liquide de lavage, il est chauffé jusqu'à une température de 100° à 700°C en présence d'eau pour obtenir de la sorte un chlorure d'aluminium basique cristallin contenant du sulfate, et le gaz chlorhydrique libéré pendant le chauffage est recyclé à l'étage où ce sulfochlorure d'aluminium est précipité.

2. Procédé suivant la revendication 1, caractérisé en ce qu'on lave le précipité avec une quantité telle d'acide chlorhydrique que du chlorure d'aluminium solide soit formé directement, et en ce que ce chlorure d'aluminium solide est ensuite chauffé pour former un chlorure d'aluminium basique qui ne comporte pratiquement pas de sulfate.

3. Procédé suivant la revendication 1, caractérisé en ce qu'on lave le précipité avec de l'acide chlorhydrique dilué pour dissoudre le précipité susdit, puis du chlorure d'aluminium ayant une plus faible teneur en sulfate que le précipité est précipité de la solution par recristallisation, en introduisant du gaz chlorhydrique cette solution.

FIG. 1

FIG. 2